# EUROPEAN PATENT SPECIFICATION

(11) **EP 3 152 436 B1**
(45) Date of publication and mention of the grant of the patent: **13.02.2019**
(21) Application number: 15766251.1
(22) Date of filing: 04.06.2015
(51) Int. Cl.: F03B 17/06, F03B 13/26

(54) **HYDROELECTRIC TURBINE WITH HORIZONTAL AXIS**
HYDROELEKTRISCHE TURBINE MIT HORIZONTALER ACHSE
TURBINE HYDROÉLECTRIQUE À AXE HORIZONTAL

(30) Priority: 04.06.2014 IT PI20140039
(43) Date of publication of application: 12.04.2017
(73) Proprietor: COS.B.I. Costruzione Bobine Italia S.r.l., 29010 Cadeo (PC) (IT)
(72) Inventor: REBECCHI, Fabio, I-29010 Cadeo (PC) (IT); REBECCHI, Marco, I-29010 Cadeo (PC) (IT)
(74) Representative: Celestino, Marco
(86) International application number: PCT/IB2015/054224
(87) International publication number: WO 2015/186086

(56) References cited:
- CA-A1- 2 532 734
- GB-A- 2 468 881
- JP-A- S6 140 464
- US-A1- 2007 269 305
- US-A1- 2011 309 624
- US-A1- 2013 026 762

## Description

### Field of the invention

The present invention relates to the field of hydropower generation.

In particular, the present invention relates to the field of hydroelectric turbines with horizontal axis.

### Description of the prior art

In the field of power generation by means of hydroelectric turbines, solutions are known with turbines partially immersed in a water flow, as described, for example, in CN201090360Y, in GB191314088A, or in US4270056.

However, this solution has relevant drawbacks in terms of energy efficiency, since the flow that invests the rotating blades of the turbine is not optimal because of the vortices that are formed on the water surface when the blades leave the water. On the other hand, the shape of the blades described in the solutions of the prior art is normally a flat plate, and this prevents the possibility to immerse all the rotor blades at the same time in the water flow, since it would cause a stall of the rotor.

The hydroelectric turbine described in JPS5872677A tries of overcome the problem proposing blades with aerodynamic profile, which allow to immerse the rotor integrally in the flow.

However, this solution requires that the rotor has a vertical axis. This brings to some drawbacks.

First, the rotor cannot be immersed in shallow waters, such as beds of rivers or creeks or canals, unless the blades are very short and therefore not much efficient.

Furthermore, the vertical axis rotor proposed in JPS5872677A is constrained only in the upper end, and this causes inevitably an inclination of the rotation axis itself due to the pressure of the flow, which makes the flow no longer perpendicular to the blades, thus decreasing the hydrodynamic efficiency.

There is then a further drawback due to the speed profile assumed by the flow in relation to the depth. It is in fact known that the speed of a fluid that slides on a solid surface is null at the contact point with the surface itself and increases proportionally to the distance from that surface. This dependence of the flow speed on the depth of the water basin causes that, in the case of a vertical axis rotor, such as that provided in JPS5872677A, you have on the rotor itself hydrodynamic forces that are not constants with the depth. This causes, as is obvious, the presence of bending moments on the rotor axis, and to avoid that it is necessary an expensive sizing of the blades in relation to the working depth.

Furthermore, the turbine above described have a limited longitudinal length , due to the bending and twisting loads to which the rotor assembly is subjected.

A solution is offered by the turbine described in US2007269305 and US2013026762, where the rotor assembly is comprises more modules placed in series and connected to each other by means of dividing septa arranged to increase the resistance of the structure.

Such septa, however, offer high resistance against the water flow, worsening the energy efficiency of the turbine and causing the structure to be subject to harmful aeroelastic phenomena , especially in case of large turbines invested by water flows of high flow rate.

A further drawback given by the above cited documents is due to the fact that the torque provided by the lift generated by the blades is highly sinusoidal, and therefore not constant. Therefore, the turbines above described are subjected to strong fatigue loads, in addition to have a limited efficiency.

### Summary of the invention

It is therefore a feature of the present invention to provide a hydroelectric turbine that solves the above described technical problems.

In particular, it is a feature of the invention to provide a hydroelectric turbine that can be installed in water basins with shallow waters, such as beds of rivers or creeks, or canals.

It is also a feature of the present invention to provide such a hydroelectric turbine that maintains a rotation axis perpendicular to the direction of the hydric flow.

It is also a feature of the present invention to provide such a hydroelectric turbine that allows higher maintainability, safety and portability with respect to the solutions of the prior art.

It is still a feature of the present invention to provide such a hydroelectric turbine that allows to adjusts the depth of the riverbed at which place the rotor.

It is a further feature of the present invention to provide such a hydroelectric turbine that is adaptable to water basins of different transversal width.

It is also a feature of the present invention to provide such a hydroelectric turbine that increases the torque generated by the rotor assembly with respect to the solutions of the prior art.

It is still a feature of the present invention to provide such a hydroelectric turbine that increases the hydrodynamic efficiency of the rotor assembly.

It is a further feature of the present invention to provide such a hydroelectric turbine that reduces the harmful aeroelastic effects to which the rotor assembly is submitted.

These and other objects are achieved by a hydroelectric turbine According to claim 1.

The fact that the blades have aerodynamic profile, in addition to provide a higher fluid dynamic efficiency to each blade, allows also to immerse all the blades at the same time in the water flow, further increasing the efficiency of the rotor. This would be impossible with blades having a flat profile, since, immerging all the blades in the water, it would not be possible to generate the necessary moment to the rotation of the rotor.

However, the mere presence of blades having aerodynamic profile would do not allow to completely overcome the technical problems mentioned in the prior art. For this reason, it has been provided the presence of a rotor assembly with a horizontal rotation axis x that allows to overcome the effect due to the speed profile of the hydric flow , that, as known, is function of the coordinate of depth of the hydric basin. In particular, the rotor assembly with horizontal axis provided by the present invention allows to have a fixed flow speed on all the blades immersed in the flow itself, avoiding unwanted bending moments and allowing an extremely simplified sizing of the blades.

Furthermore, the fact that the rotation axis x is kept by the support structure in a position substantially horizontal allows the turbine of being installed in water basins with shallow waters, such as bed of rivers or creeks, or canals. The fact, instead, that the axis is kept in a position substantially orthogonal to the water flow allows to maximize the flowrate of the flow that impacts with the blades.

In addition, the angular offset *ϕ* allows the blades to work, on the whole, substantially as helical blades, making more homogeneous the torque generated by the rotor assembly during the rotation of the rotor assembly itself. The advantage with respect to the helical blades, however, lies in the possibility to assemble a predetermined number of modules, changing as desired the angular offset *ϕ*, and thus making the turbine to be much more adaptable to the various types of flow and of hydric basins where the rotor assembly is immersed. Furthermore, the solution provided by the present invention is much cheaper in terms of construction.

A further advantage given by the presence of more modules with blades out of phase to each other is that, in addition to increase the overall power generated by the rotor assembly, it is also possible to generate a more constant torque, with benefits both in terms of stresses of the mechanical components both in terms of efficiency in the transformation into electric energy.

According to the invention, the rotor assembly comprises a central shaft aligned to the rotation axis x and arranged to increase the structural stiffness of the rotor assembly. Such exemplary embodiment reduces the structural impact that the vibrations owing to the rotational moving of the blades have on the rotor itself.

Furthermore, the blades are connected to the central shaft through a plurality of dividing elements, each dividing element comprising at least one blade having aerodynamic profile and arranged in order to offer the minimum resistance against the water flow.

This solution causes a high advantage with respect to the solutions of the prior art, which provide the presence of solid discs for the connection between the central shaft and the blades. In fact the dividing elements provided by the present invention reduce strongly both the weight of the structure both especially the occurrence of aeroelastic phenomena that could create fatigue stresses that can damage the structure. Furthermore, the dividing elements offer a reduced resistance against the water flow, increasing the overall efficiency of the turbine.

Advantageously, the n-th blade (115') of a first module is connected to the respective n-th blade of a second module, next to the first module, by an angular septum having shape substantially arched strip-like, in order to increase the structural resistance ensuring in the meantime the minimum weight and the minimum hydrodynamic resistance.

In particular, the angular offset *ϕ* is dependent on the number *n* of blades and on the number *m* of modules according to the law *ϕ* = 360°/(*n* * *m*).

Advantageously, the electric power generator is aligned to said rotation axis *x*, in order to increase the overall efficiency since it is reduced the number of transmission elements which transfer the rotational motion to the rotor assembly.

According to the invention, the support structure comprises two arms arranged to place the rotor assembly between a position completely immersed in the water flow and a position emerged by the water flow.

This technical solution provides many advantages.

First, the two arms are binding the rotor assembly on both sides, providing a high improvement of the structural stiffness of the turbine, and thus ensuring that the rotation axis x does not bend because of the wave motion, but remains straight and perpendicular to the water flow, increasing the efficiency of the rotor assembly with respect to the solutions of the prior art.

Furthermore, because it is possible to place the rotor assembly in the emerged position, there is a higher safety in case of flood of the hydric basin.

There is then an advantage in terms of maintainability, since it is possible to carry out the cleaning, and any repairs, of the rotor assembly in the emerged position.

A further advantage is that the rotor assembly can stay emerged when the turbine is not in use, with obvious reduction of the wear and especially of the encrustationson the blades.

There is then also a considerable advantage in terms of transportability of the turbine itself.

In particular, the arms are adapted to place the rotor assembly in a plurality of positions immersed in the water flow at different depth.

This leads to the possibility of displacing the rotor assembly at the coordinate of depth optimal in terms of flow speed, thus allowing maximize the electric power collected.

Advantageously, the blades have, in cross-section, a symmetric aerodynamic profile. Such solution is particularly advantageous in case of low flow speed, since it allows the rotor assembly to start its rotation even for low power of the flow itself, thus not requiring a mechanical starter motor.

Alternatively, the blades have, in cross-section, an antisymmetric aerodynamic profile. Such alternative solution is particularly advantageous for high flow speed, since it provides a higher efficiency than the symmetric profile, but it needs a forced start if the flow speed is too low.

In particular, the electric power generator is arranged to cause the rotation of the rotor assembly at the start-up phase of the rotation. Such solution avoids the need of a starter motor, in case that the profile of the blades is such as to make it difficult the start of the rotor assembly.

In particular, a convergent duct upstream of the rotor assembly is provided.

In particular, a divergent duct downstream of the rotor assembly is provided.

Advantageously, the support structure comprises a floating platform arranged to move the hydroelectric turbine on of a water surface.

### Brief description of the drawings

Further characteristic and/or advantages of the present invention are more clear with the following description of some exemplary embodiments, exemplifying but not limitative, with reference to the attached drawings in which:
- Fig. 1A shows, in a schematic front view, a first exemplary embodiment of the hydroelectric turbine, not according to the present invention, where the rotor assembly has a single module and is in a position immersed;
- Fig. 1B shows, in a schematic side view, the exemplary embodiment of Fig. 1A;
- Fig. 2A shows, in a schematic front view, the exemplary embodiment of Fig. 1A, where the rotor assembly is in a position completely emerged;
- Fig. 2B shows, in a schematic side view, the exemplary embodiment of Fig. 2A;
- Fig. 3A shows, in a schematic front view, a second exemplary embodiment of the hydroelectric turbine, according to the present invention, where the rotor assembly has three adjacent modules;
- Fig. 3B shows, in a schematic side view, the rotor assembly of Fig. 3a, pointing out the angular displacement of blades;
- Fig. 4A shows a diagram of the torque generated by the rotor assembly in the case of a single module;
- Fig. 4B shows a diagram of the torque generated by the rotor assembly in the case of three modules;
- Fig. 5 shows a perspective detailed view of the rotor assembly of the exemplary embodiment of Fig. 3A;
- Fig. 6 shows, in a perspective detailed view, an exemplary embodiment of the support structure and of the rotor assembly;
- Fig. 6A shows a detail of Fig. 6;
- Fig. 7 shows a top plan view of the exemplary embodiment of Fig. 6;
- Fig. 8 shows a side view of the exemplary embodiment of Fig. 6;
- Fig. 9 shows, in a schematic side view, an alternative embodiment of the rotor assembly.

### Description of a preferred exemplary embodiment

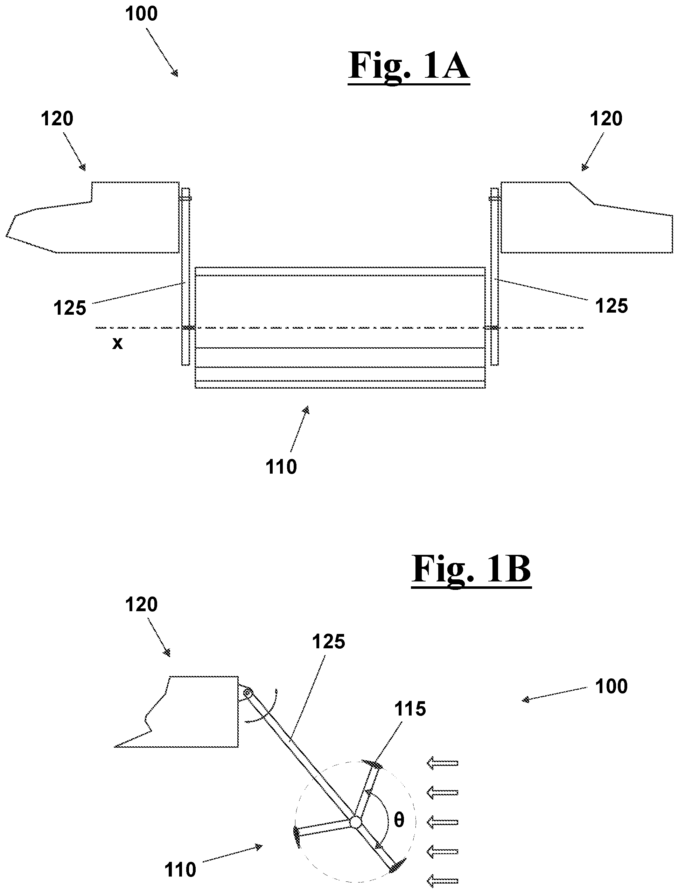

With reference to Figs. 1A and 1B, a first exemplary embodiment of the hydroelectric turbine 100, comprises a rotor assembly 110 having a rotation axis *x* and comprising a plurality of blades 115 that, in use, are completely immersed in a water flow (Fig. 1B). The blades are parallel to the rotation axis *x* and arranged around it with a predetermined angular range *θ*, which in the case of Fig. 1B is equal to 120°. For effect of the water flow, the rotor assembly 110 is arranged to rotate about its rotation axis *x*. This is possible, notwithstanding all the blades 115 are at the same time immersed in the flow, owing to the hydrodynamic shape of the blades 115.

The hydroelectric turbine 100 comprises then a support structure 120, fixed or mobile, arranged to support the rotor assembly 110, and an electric power generator that comes into operation for effect of the rotation of the rotor assembly 110.

As shown in Fig. 1A, the rotation axis *x* of the rotor assembly 110 is a horizontal axis. This way, the turbine 100 can be installed in water basins with shallow waters, such as bed of rivers or creeks, or canals.

Furthermore, the rotor assembly 110 is supported on both sides by the arms 125, steadily constraining the axis *x* to remain perpendicular to the water flow, in order to maximizing the flowrate of the flow that impacts with the blades 115.

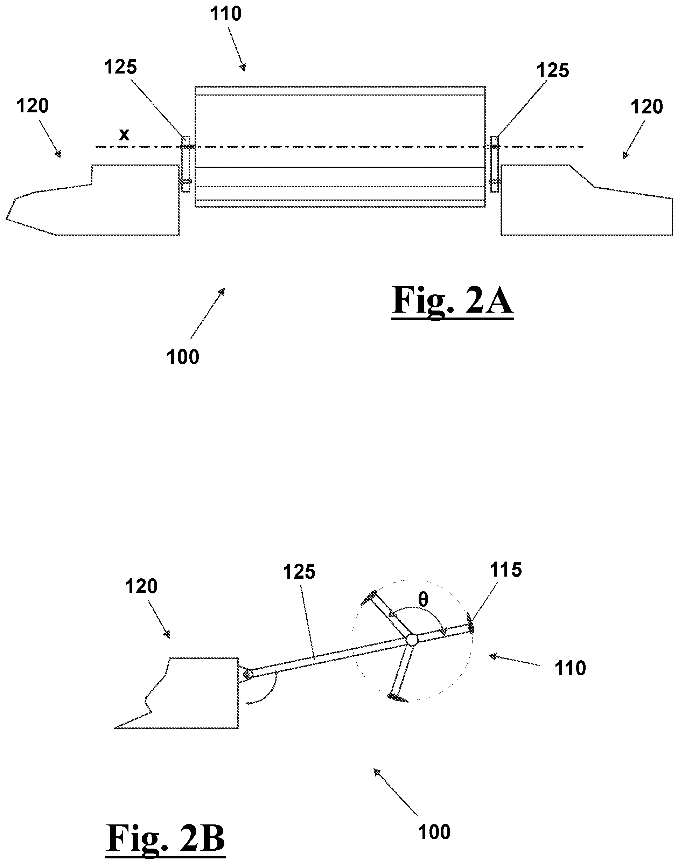

With reference to Figs. 2A and 2B, the arms 125 can adjust the height of the rotor assembly 110, allowing to place the rotor assembly 110 between a position completely immersed in the water flow and a position emerged by the water flow. Such aspect of the invention provides many advantages with respect to the prior art. First, there is a higher safety in case of flood of the hydric basin where the rotor assembly 110 is placed. There is then an advantage in terms of maintainability, since it is possible to carry out the cleaning, and any repairs, of the rotor assembly 110 in the emerged position. Furthermore, the rotor assembly 110 can stay emerged when the turbine 100 is not in use, with obvious reduction of the wear and especially of the encrustations on the blades 115. There is then also a considerable advantage in terms of transportability of the turbine.

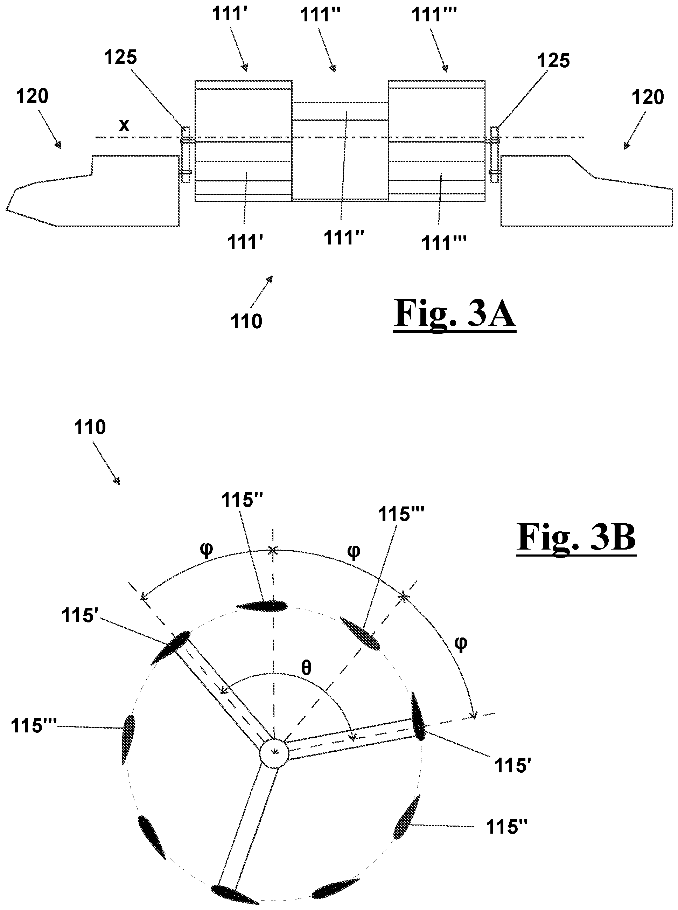

With reference to Figs. 3A and 3B, an exemplary embodiment of the turbine 100 provides that the rotor assembly 110 comprises more modules 111 comprising blades 115. This way, it is possible to increase the width of the rotor assembly 110, in order to adapt it to different transversal widths of the hydric basin in which the hydroelectric turbine 100 has to work.

In particular, in the case of Figs. 3A and 3B, three modules 111', 111'', 111''' are provided each of which comprises, respectively, 3 blades 115', 115'', 115'''.

More in detail, with reference to Fig. 3, B, the blades 115 are arranged in such a way that the *n*-th blade 115' of a first module 111' has a predetermined angular offset *ϕ* with respect to the respective *n*-th blade 115" of a second module 111" next to the first module 111'. This way, each blade 115 has an angular offset *ϕ* with respect to the corresponding blade of the adjacent module 111.

This innovative feature allows the blades 115 to work, on the whole, substantially as helical blades, making more homogeneous the torque generated by the rotor assembly 110 during the rotation of the rotor assembly itself. The advantage with respect to the helical blades, however, lies in the possibility to assemble a predetermined number of modules 111, changing as desired the angular offset *ϕ*, and thus making the turbine to be much more adaptable to the various types of flow and of hydric basins where the rotor assembly 110is immersed. Furthermore, the solution provided by the present invention is much cheaper in terms of construction.

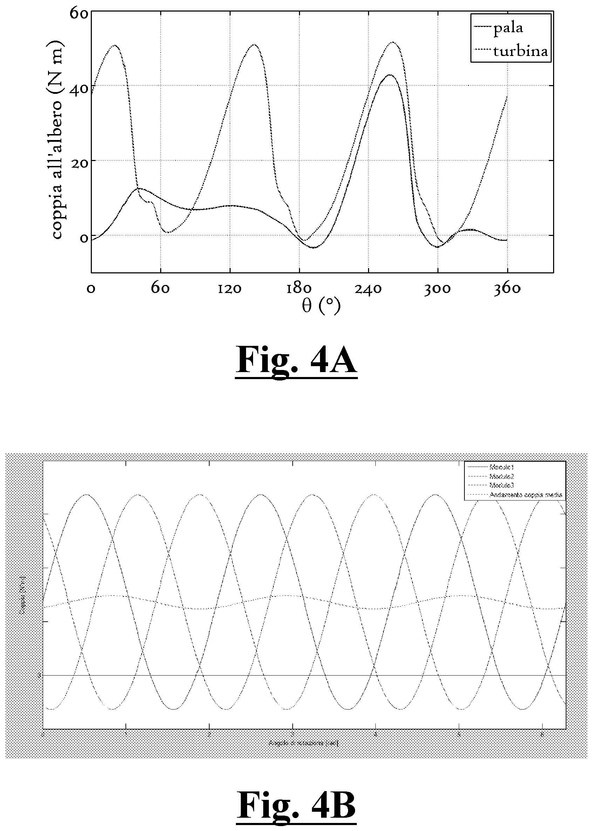

In the figures 4A and 4B it is possible to see a comparison between the solution with a single module 111 and the solution with 3 modules 111 having blades out of phase to each other. In particular, Fig. 4A shows a comparison between the trend, varying the rotation angle of the rotor assembly 110, of the torque of a module 111 having a single blade 115 (lower line) and a module 111 having 3 blades 115 (upper line). As visible, the solution with 3 blades 115 provides a higher average torque since it presents 3 peaks in a rotation of 360°. Fig. 4B shows then the trend of the torque of a rotor assembly 110 comprising 3 modules 111 each of which has 3 blades 115. As visible the average torque increases further and, in addiction to have a value much more constant rispect to the solution with a single module 111.

This solution allows, not only to increase the overall power generated by the rotor assembly 110, but also to generate a more constant torque, with in terms of stresses to the mechanical components both in terms of efficiency in the transformation in electric energy.

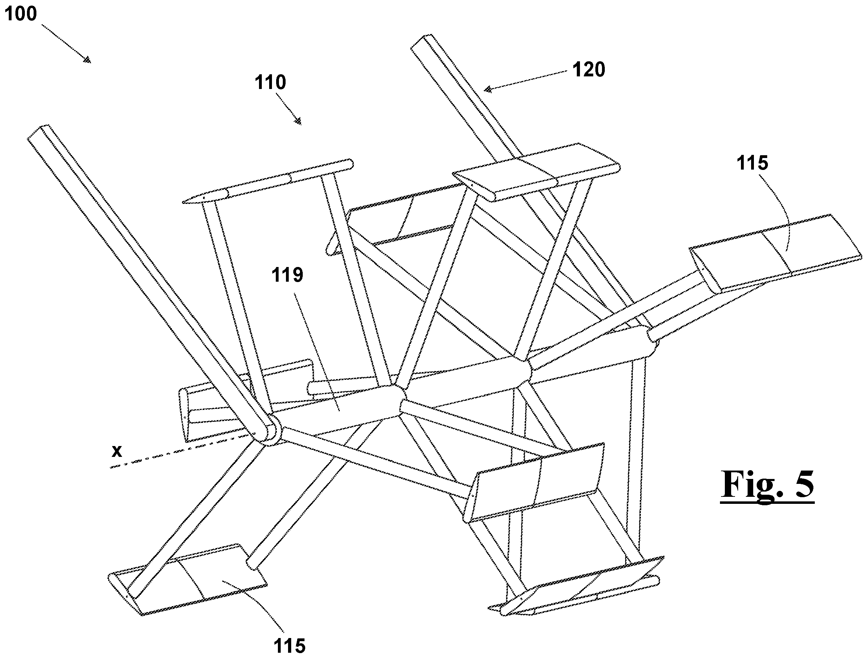

In Fig. 5 is shown a perspective and detailed view of the rotor assembly 110, as provided in the exemplary embodiment of Figs. 3A and 3B. As visible, a central shaft 119 is further provided arranged to increase the structural stiffness of the rotor assembly 110, in order to reduce the impact of the vibrations given by the rotational motion of the blades 115, and to avoid a further inclination of the axis x with respect to the direction which is orthogonal to the water flow.

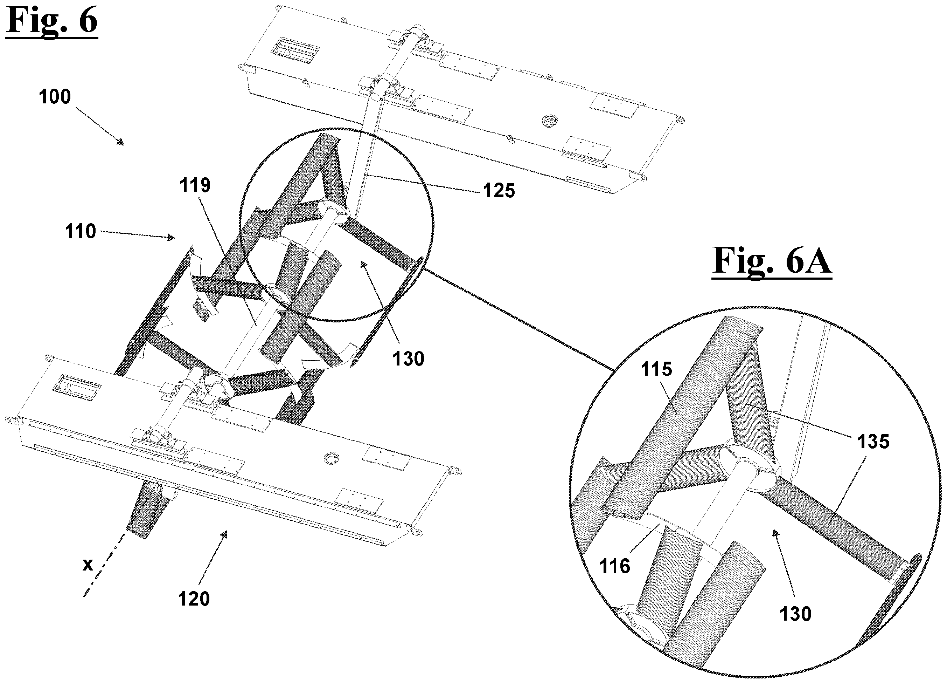

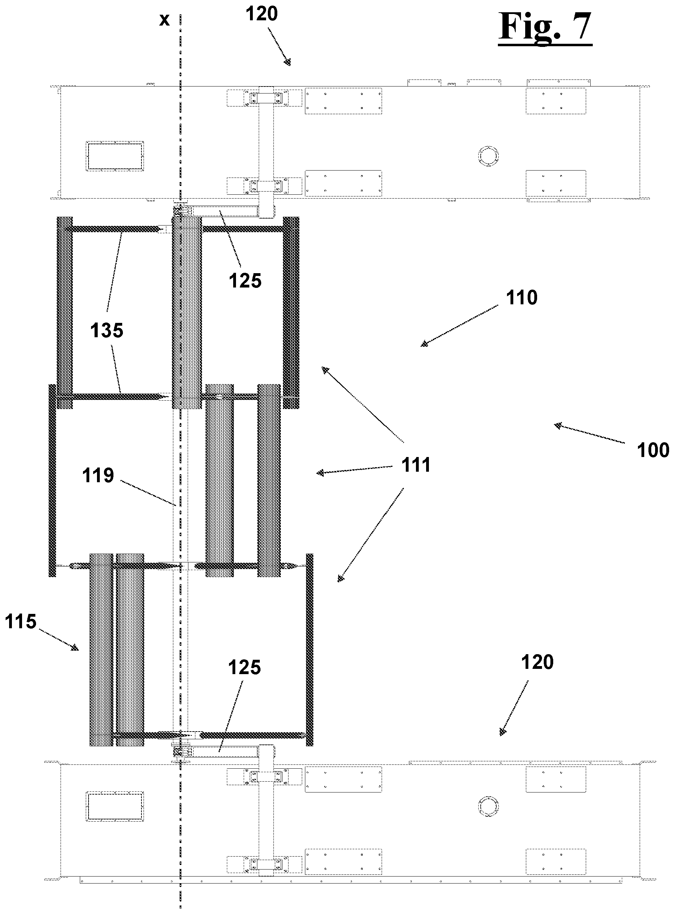

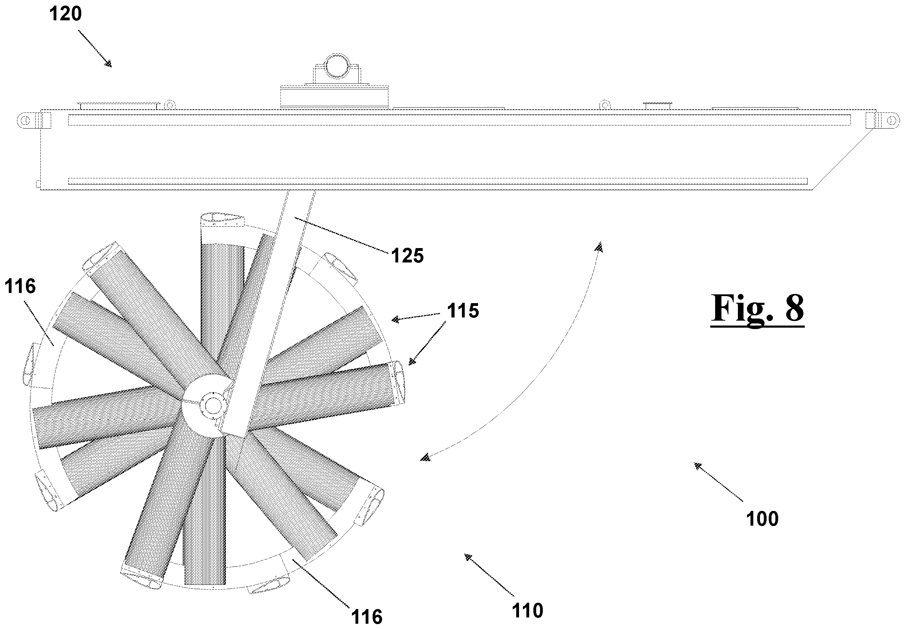

In Figs. 6 to 8 an exemplary embodiment is shown which provides the presence of some dividing elements 130 located at the end side of the modules 111 and arranged to connect the blades 115 to the central shaft 119. Such dividing elements comprise a plurality of blades 135, in particular 3, having aerodynamic profile and arranged aligned to the water flow.

This solution implies a considerable advantage with respect to the solutions of the prior art, which provide the presence of solid discs for the connection between the central shaft and the blades. In fact the dividing elements 130 provided by the present invention reduce strongly both the weight of the structure both especially the occurrence of aeroelastic phenomena that could create fatigue stresses that can damage the structure. Furthermore, the dividing elements 130 offer a reduced resistance against the water flow, increasing the overall efficiency of the turbine.

The exemplary embodiment of Figs. 6 to 8 provides also the presence of a plurality of angular septa 116, each of which is adapted to connect the blade 115 of a module 111 with a corresponding blade 115 of an adjacent module 111. In particular, the angular septum 116 has an arched strip-like shape , in order to increase the structural resistance ensuring in the meantime the minimum weight and the minimum hydrodynamic resistance. Still with reference to Figs. 6 to 8, the present invention provides that the support structure 120 both a floating structure, for example a barge, which allows an easy handling of the turbine 100 on the surface of the hydric basin. This aspect of the invention, in synergy with the possibility of placing the rotor assembly 110 in an emerged position, provides to the present invention a high transportability, allowing to change the depth of immersion of the rotor assembly 110 in the hydric basin, according to the environmental conditions, or to other factors of interest.

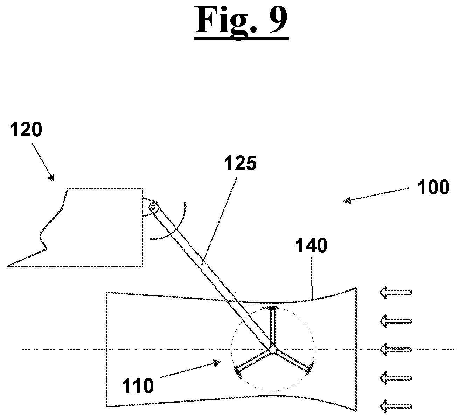

With reference to Fig. 9, in an exemplary embodiment of the present invention a duct converging-diverging 140 is provided that allows a higher acceleration of the flow in the vicinity of the rotor assembly 110, increasing the electric power generated by the turbine 100.

The foregoing description some exemplary specific embodiments will so fully reveal the invention according to the conceptual point of view, so that others, by applying current knowledge, will be able to modify and/or adapt in various applications the specific exemplary embodiments without further research and without parting from the invention, and, accordingly, it is meant that such adaptations and modifications will have to be considered as equivalent to the specific embodiments. The means and the materials to realise the different functions described herein could have a different nature without, for this reason, departing from the field of the invention. it is to be understood that the phraseology or terminology that is employed herein is for the purpose of description and not of limitation.

## Claims

1. A hydroelectric turbine (100) comprising:
- a rotor assembly (110) having a rotation axis *x* and comprising a number *m* of modules (111) adjacent to each other and aligned to each other, each module (111) comprising a number *n* of blades (115) parallel to said rotation axis *x* and arranged about said rotation axis *x* with a predetermined angular range *θ*, said rotor assembly (110) arranged to rotate, in use, about said rotation axis *x* when said blades (115) are immersed in a water flow;
- a support structure (120) arranged to support said rotor assembly (110);
- an electric power generator operatively connected to said rotor assembly (110), said electric power generator arranged to generate electric power by the rotation of said rotor assembly (110) about said rotation axis x;
said blades (115) having, in cross-section, an aerodynamic profile, in order to increase the fluid dynamic efficiency of said blades (115) when they are immersed in said water flow,
said support structure (120) being configured to keep said rotation axis *x,* in use, in a position substantially horizontal and orthogonal to said water flow,
said support structure (120) comprising two arms (125) arranged to move said rotor assembly (110) relatively respect to
said support structure (120) for placing said rotor assembly (110) between a position completely immersed in said water flow and a position emerged from said water flow,
said hydroelectric turbine (100) **characterized in that** the *n*-th blade (115') of a first module (111') is arranged with a predetermined angular offset *ϕ* with respect to the respective *n*-th blade (115") of a second module (111") next to said first module (111'),
**in that** said rotor assembly (110) comprises a central shaft (119) arranged to increase the structural stiffness of said rotor assembly (110), said central shaft (119) being aligned to said rotation axis *x*,
**and in that** said blades (115) are connected to said central shaft (119) through a plurality of dividing elements (130), each dividing element (130) comprising at least one blade (135) having an aerodynamic profile and arranged in order to offer the minimum resistance against said water flow.

2. Hydroelectric turbine (100), according to claim 1, wherein the *n*-thblade (115') of a first module (111') is connected to the respective *n*-th blade (115") of a second module (111"), next to said first module (111'), by an angular septum (116), said angular septum (116) having shape substantially arched strip-like.

3. Hydroelectric turbine (100), according to claim 1, wherein said angular offset *ϕ* is dependent on the number *n* of blades (115) and on the number *m* of modules (111) according to the law *ϕ* = 360°/(*n* * *m*).

4. Hydroelectric turbine (100), according to claim 1, wherein said electric power generator is aligned to said rotation axis *x.*

5. Hydroelectric turbine (100), according to claim 1, wherein said arms (125) are arranged to place said rotor assembly (110) in a plurality of positions immersed in said water flow at different depths.

6. Hydroelectric turbine (100), according to claim 1, wherein said blades (115) have, in cross-section, a profile selected between:
- a symmetric aerodynamic profile;
- an antisymmetric aerodynamic profile.

7. Hydroelectric turbine (100), according to claim 1, wherein said electric power generator is configured to cause a rotation of said rotor assembly (110) at the starting step of the rotation.

8. Hydroelectric turbine (100), according to claim 1, wherein a convergent duct upstream of said rotor assembly (110) and a divergent duct downstream of said rotor assembly (110) are provided.

9. Hydroelectric turbine (100), according to claim 1, wherein said support structure (120) comprises a floating platform arranged to move said hydroelectric turbine (100) on a water surface.

## Patentansprüche

1. Eine hydroelektrische Turbine (100) mit:
- einer Rotoranordnung (110), die eine Rotationsachse x hat und eine Anzahl m von Modulen (111) umfasst, die nebeneinander liegen und zueinander ausgerichtet sind, wobei jedes Modul (111) eine Anzahl n von Flügeln (115) umfasst, die parallel zu der Rotationsachse x sind und um die Rotationsachse x mit einem vorbestimmten Winkelbereich θ angeordnet sind, wobei die Rotoranordnung (110) so angeordnet ist, dass sie im Betrieb um die Rotationsachse x rotiert, wenn die Flügel (115) in eine Wasserströmung eingetaucht sind,
- einer Trägerstruktur (120), die angeordnet ist, um die Rotoranordnung (110) zu tragen,
- einem Stromerzeuger, der operativ mit der Rotoranordnung (110) verbunden ist, wobei der Stromerzeuger angeordnet ist, um durch die Rotation der Rotoranordnung (110) um die Rotationsachse x elektrische Energie zu erzeugen,
wobei die Flügel (115) im Querschnitt ein aerodynamisches Profil haben, um die fluiddynamische Effizienz der Flügel (115) zu erhöhen, wenn sie in die Wasserströmung eingetaucht sind,
die Trägerstruktur (120) ausgestaltet ist, um die Rotationsachse x im Betrieb in einer Position zu halten, die im Wesentlichen horizontal und orthogonal zu der Wasserströmung ist,
die Trägerstruktur (120) zwei Arme (125) umfasst, die angeordnet sind, um die Rotoranordnung (110) relativ bezüglich der Trägerstruktur (120) zum Anordnen der Rotoranordnung (110) zwischen einer Position, die vollständig in die Wasserströmung eingetaucht ist, und einer Position, die aus der Wasserströmung aufgetaucht ist, zu bewegen,
die hydroelektrische Turbine (100) **dadurch gekennzeichnet ist, dass** der n-te Flügel (115') eines ersten Moduls (111') mit einem vorbestimmten Winkelversatz ϕ bezüglich dem jeweiligen n-ten Flügel (115'') eines zweiten Moduls (111'') neben dem ersten Modul (111') angeordnet ist,
dass die Rotoranordnung (110) eine Mittelwelle (119) umfasst, die angeordnet ist, um die strukturelle Steifigkeit der Rotoranordnung (110) zu erhöhen, wobei die Mittelwelle (119) zu der Rotationsachse x ausgerichtet ist,
und dass die Flügel (115) mit der Mittelwelle (119) durch eine Vielzahl von Trennelementen (130) verbunden sind, wobei jedes Trennelement (130) zumindest einen Flügel (135) umfasst, der ein aerodynamisches Profil aufweist und angeordnet ist, um den Minimalwiderstand gegenüber der Wasserströmung zu bieten.

2. Hydroelektrische Turbine (100) gemäß Anspruch 1, wobei der n-te Flügel (115') eines ersten Moduls (111') durch ein winkelförmiges Septum (116) mit dem jeweiligen n-ten Flügel (115'') eines zweiten Moduls (111''), das neben dem ersten Modul (111') liegt, verbunden ist, wobei das winkelförmige Septum (116) eine Form hat, die im Wesentlichen gewölbt streifenartig ist.

3. Hydroelektrische Turbine (100) gemäß Anspruch 1, wobei der Winkelversatz ϕ abhängig von der Anzahl n von Flügeln (115) und von der Anzahl m von Modulen (111) gemäß dem Gesetz ϕ = 360°/(n*m) ist.

4. Hydroelektrische Turbine (100) gemäß Anspruch 1, wobei der Stromerzeuger zu der Rotationsachse x ausgerichtet ist.

5. Hydroelektrische Turbine (100) gemäß Anspruch 1, wobei die Arme (125) angeordnet sind, um die Rotoranordnung (110) in einer Vielzahl von Positionen, die in die Wasserströmung in verschiedenen Tiefen eingetaucht sind, anzuordnen.

6. Hydroelektrische Turbine (100) gemäß Anspruch 1, wobei die Flügel (115) im Querschnitt ein Profil aufweisen, das zwischen:
- einem symmetrischen aerodynamischen Profil,
- einem antisymmetrischen aerodynamischen Profil ausgewählt ist.

7. Hydroelektrische Turbine (100) gemäß Anspruch 1, wobei der Stromerzeuger ausgestaltet ist, um eine Rotation der Rotoranordnung (110) an dem Anfangsschritt der Rotation zu veranlassen.

8. Hydroelektrische Turbine (100) gemäß Anspruch 1, wobei ein konvergenter Kanal stromauf der Rotoranordnung (110) und ein divergenter Kanal stromab der Rotoranordnung (110) vorgesehen sind.

9. Hydroelektrische Turbine (100) gemäß Anspruch 1, wobei die Trägerstruktur (120) eine schwimmende Plattform umfasst, die angeordnet ist, um die hydroelektrische Turbine (100) auf einer Wasseroberfläche zu bewegen.

## Revendications

1. Turbine hydroélectrique (100) comprenant :
- un ensemble rotor (110) possédant un axe de rotation *x,* et comprenant un certain nombre *m* de modules (111) adjacents entre eux et alignés les uns sur les autres, chaque module (111) comprenant un certain nombre *n* d'aubes (115) parallèles audit axe de rotation *x,* et agencées autour dudit axe de rotation x avec une plage angulaire *θ* prédéterminée, ledit ensemble rotor (110) étant agencé pour tourner, en cours d'usage, autour dudit axe de rotation *x* lorsque lesdites aubes (115) sont immergées dans un débit d'eau ;
- une structure de support (120) agencée pour supporter ledit ensemble rotor (110) ;
- un générateur d'énergie électrique connecté fonctionnellement audit ensemble rotor (110), ledit générateur d'énergie électrique étant agencé pour générer de l'énergie électrique par la rotation dudit ensemble rotor (110) autour dudit axe de rotation x ;
lesdites aubes (115) présentant, dans leur section transversale, un profil aérodynamique afin de renforcer le rendement dynamique fluidique desdites aubes (115) lors de leur immersion dans ledit débit d'eau,
ladite structure de support (120) étant configurée pour maintenir, en cours d'usage, ledit axe de rotation x dans une position substantiellement horizontale et perpendiculaire audit débit d'eau,
ladite structure de support (120) comprenant deux bras (125) agencés pour déplacer ledit ensemble rotor (110) relativement à ladite structure de support (120) afin de placer ledit ensemble rotor (110) entre une position d'immersion intégrale dans ledit débit d'eau et une position émergée dudit débit d'eau,
ladite turbine hydroélectrique (100) étant **caractérisée en ce que** la *n*^{ème} aube (115') d'un premier module (111') est agencée avec un déport angulaire prédéterminé *ϕ* relativement à la *n*^{ème} aube (115") correspondante d'un deuxième module (111") contigu audit premier module (111'), dans lequel ledit ensemble rotor (110) comprend un arbre central (119) agencé pour accroître la rigidité structurelle dudit ensemble rotor (110), ledit arbre central (119) étant aligné avec ledit axe de rotation x, et
**en ce que** lesdites aubes (115) sont raccordées audit arbre central (119) par le biais d'une pluralité d'éléments diviseurs (130), chaque élément diviseur (130) comprenant au moins une aube (135) possédant un profil aérodynamique et agencée de façon à présenter le minimum de résistance audit débit d'eau.

2. Turbine hydroélectrique (100) selon la revendication 1, la *n*^{ème} aube (115') d'un premier module (111') étant connectée à la *n*^{ème} aube (115") correspondante d'un deuxième module (111"), contigu audit premier module (111'), par un septum angulaire (116), la forme dudit septum angulaire (116) étant substantiellement celle d'une bande voûtée.

3. Turbine hydroélectrique (100) selon la revendication 1, ledit déport angulaire *ϕ* étant tributaire du nombre *n* d'aubes (115) et du nombre *m* de modules (111) d'après la loi suivante : *ϕ* = 360°/(*n***m*).

4. Turbine hydroélectrique (100) selon la revendication 1, ledit générateur d'énergie électrique étant aligné avec ledit arbre de rotation *x.*

5. Turbine hydroélectrique (100) selon la revendication 1, lesdits bras (125) étant agencés pour placer ledit ensemble rotor (110) dans une pluralité de positions immergées dans ledit débit d'eau à différentes profondeurs.

6. Turbine hydroélectrique (100) selon la revendication 1, lesdites aubes (115) possédant, en section transversale, un profil sélectionné parmi les suivants :
- un profil aérodynamique symétrique ;
- un profil aérodynamique antisymétrique.

7. Turbine hydroélectrique (100) selon la revendication 1, ledit générateur d'énergie électrique étant configuré de façon à engendrer une rotation dudit ensemble rotor (110) à l'étape de démarrage de la rotation.

8. Turbine hydroélectrique (100) selon la revendication 1, comprenant un conduit convergent en amont dudit ensemble rotor (110) et un conduit divergent en aval dudit ensemble rotor (110).

9. Turbine hydroélectrique (100) selon la revendication 1, ladite structure de support (120) comprenant une plate-forme flottante agencée pour déplacer ladite turbine hydroélectrique (100) sur une surface d'eau.
